# EUROPEAN PATENT APPLICATION

(11) **EP 1 557 333 A1**
(43) Date of publication of application: **27.07.2005**
(21) Application number: 04772824.1
(22) Date of filing: 30.08.2004
(51) Int. Cl.: B60T 8/00, B60T 7/06

(54) **BRAKE SYSTEM**

(30) Priority: 01.09.2003 JP 2003308543
(71) Applicant: MATSUSHITA ELECTRIC INDUSTRIAL CO., LTD., Kadoma-shi, Osaka 571-8501 (JP)
(72) Inventor: SAITO, Kiyoshi, Osaka 571-0066 (JP)
(74) Representative: Grünecker, Kinkeldey, Stockmair & Schwanhäusser
(86) International application number: PCT/JP2004/012875
(87) International publication number: WO 2005/021346

(57) **Abstract**

A brake system to electrically operate a brake includes a stepping force sensor, a brake arm and a feeling-of-stepping-force generation mechanism which is disposed between the stepping force sensor and the bake arm. The brake arm holds a brake pedal. The feeling-of-stepping-force generation mechanism is rotatably connected with each of the stepping force sensor and the brake arm so as to generate a stepping force that changes nonlinearly with respect to a stroke of the brake arm. In response to a tension which is applied via the feeling-of-stepping-force generation mechanism by the travel of brake, the stepping force sensor detects a stepping force, thereby generating output to control the electrically operated brake.

## Description

### TECHNICAL FIELD

The present invention relates to an electric brake system for automobiles.

### BACKGROUND ART

Hydraulic brake systems are applied to various vehicles such as passenger cars, large trucks and aircrafts. In recent years, on the other hand, electric brake controllers that are electrically operated (what are called brake-by-wire systems or also just called brake-by-wire) are in general use. In an electric brake controller, a stepping force on a brake pedal is generally detected by a stepping force sensor, and in accordance with the detected stepping force, an electric motor or the like is driven under control of an electronic controller. As a result, a prescribed brake force is generated.

In general, with a brake pedal mechanism in an electric brake controller, the aforementioned principle of operation does not allow the driver to directly perceive a brake reaction force from the brake pedal unlike with a hydraulic brake controller. To complement this, the electric brake controller is provided with a reaction force generation mechanism which enables the driver to perceive a brake reaction force as with a hydraulic brake.

Fig. 5 is a schematic view of a conventional electric brake system.

Fig. 6 shows a relation between stepping force on a brake pedal and brake pedal stroke in the conventional electric brake system.

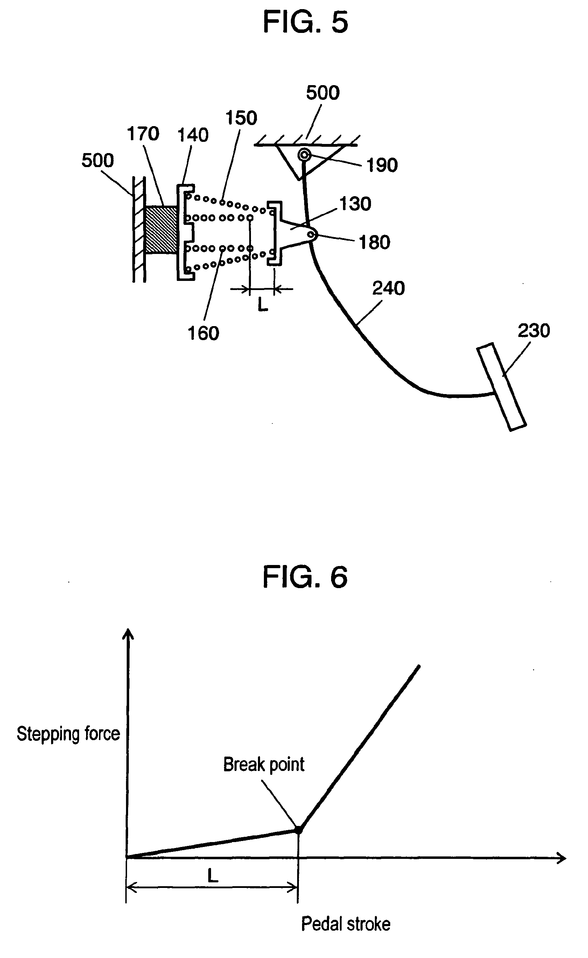

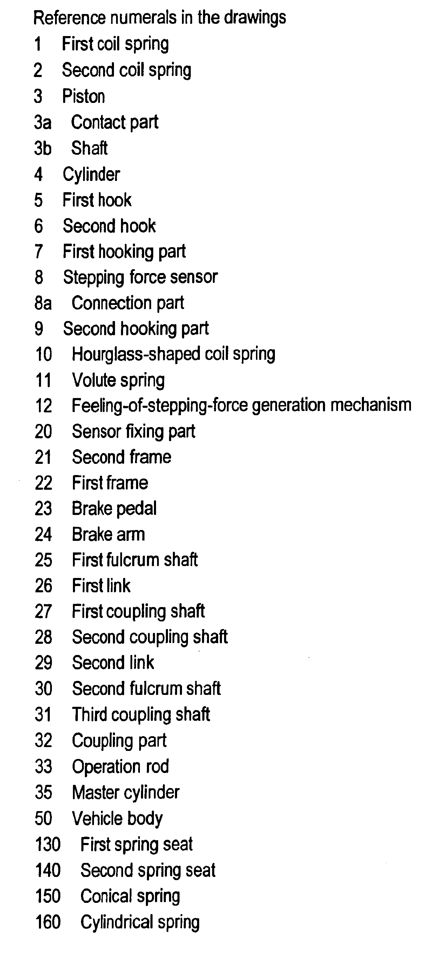

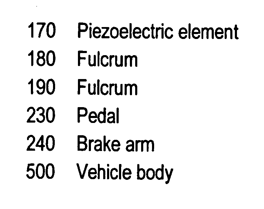

In Fig. 5, one end of brake arm 240 is attached to vehicle body 500 by fulcrum 190, and pedal 230 is attached on the other end. Brake arm 240 has first spring seat 130 attached on fulcrum 180 which is between fulcrum 190 and brake pedal 230. Between first spring seat 130 and second spring seat 140 is provided conical spring 150 and cylindrical spring 160 shorter than conical spring 150 by height L. Piezoelectric element 170 is disposed between second spring seat 140 and vehicle body 500.

Behavior of the conventional brake system thus structured will be described as follows.

When the driver starts to step on brake pedal 230, a stepping force is transmitted to piezoelectric element 170 via conical spring 150 which is disposed between first spring seat 130 attached to brake arm 240 and second spring seat 140. The stepping force is converted into an electric signal by piezoelectric effect in piezoelectric element 170, and then detected by a controller (not illustrated). The controller controls an electric brake (not illustrated) in accordance with the stepping force detected.

In Fig. 6, a horizontal axis indicates pedal stroke, and a vertical axis indicates stepping force applied to the pedal. When a pedal stroke is within the range of L shown in Figs 5 and 6, the stepping force is in balance with the reaction force of conical spring 150. When the pedal stroke exceeds L, first spring seat 130 comes into contact with cylindrical spring 160. This makes the stepping force be in balance with the sum of the reaction forces of conical spring 150 and cylindrical spring 160. As a result, as shown in Fig. 6, the relation between the pedal stroke and the stepping force is characterized in that the pedal stroke has a break point at point L. This characteristic is similar to the characteristic of a relation between pedal stroke and stepping force in a hydraulic brake.

The aforementioned example is disclosed in Japanese Patent Laid-Open Application No. H09-254778.

In an example of the conventional brake system thus structured, brake arm 240 performs a rotation around fulcrum 190 as the center of the rotation. Consequently, fulcrum 180 also performs a rotation. When first spring seat 130 pushes conical spring 150, first spring seat 130 pushes conical spring 150 not along the central axis but while rotating, thus being liable to cause prying. The prying makes it impossible to accurately transmit the stepping force to piezoelectric element 170, thereby tending to decrease the precision to detect the stepping force.

In a brake system, both a brake-by-wire and a hydraulic brake may be used at the same time. However, the aforementioned conventional electric brake system has a structure applicable only to a brake-by-wire, and it is difficult to use a hydraulic brake in the structure.

### SUMMARY OF THE INVENTION

A brake system to electrically operate a brake according to the present invention includes a stepping force sensor, a brake arm which holds a brake pedal and a feeling-of-stepping-force generation mechanism.

The feeling-of-stepping-force generation mechanism is positioned between the stepping force sensor and the bake arm, and is rotatably connected with each of the stepping force sensor and the brake arm so as to generate a stepping force that changes nonlinearly with respect to a travel stroke of the brake arm.

In response to a tension which is applied via the feeling-of-stepping-force generation mechanism by the travel of brake arm, the stepping force sensor detects a stepping force, thus generating output to control the electrically operated brake.

With the aforementioned structure, the stepping force sensor can accurately detect the stepping force. In addition, this brake system is applicable to both an electric brake and a hydraulic brake.

### BRIEF DESCRIPTION OF THE DRAWINGS

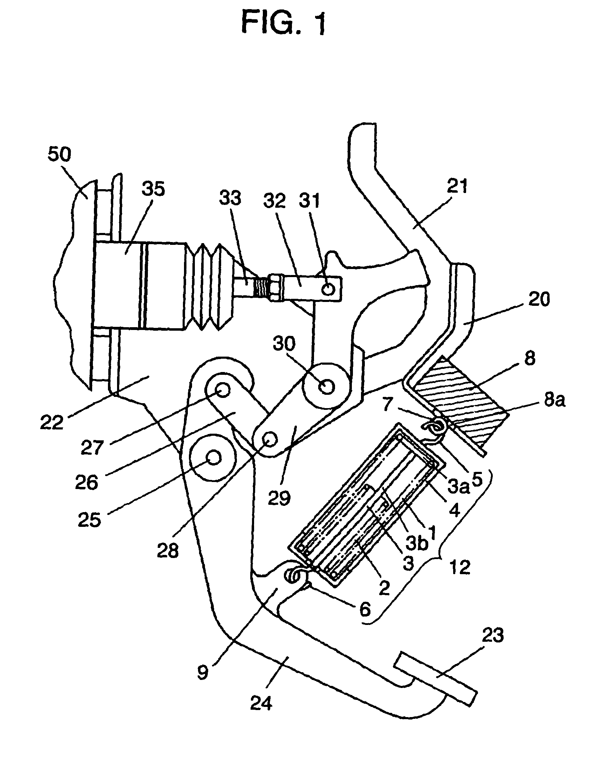

Fig. 1 is a cross sectional view showing a structure of a brake system according to an embodiment of the present invention.

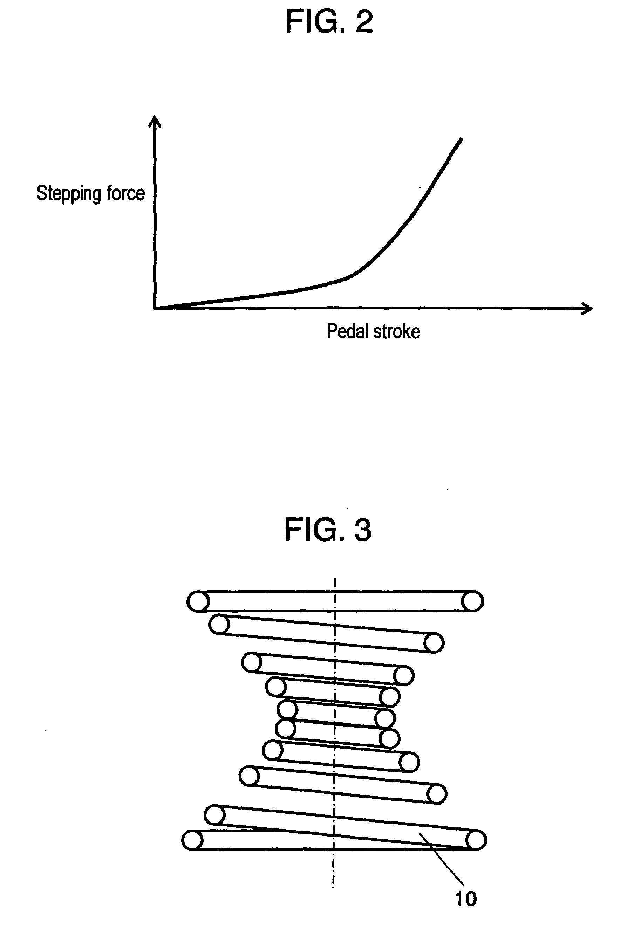

Fig. 2 shows a relation between pedal stepping force and brake pedal stroke in the brake system according to the embodiment of the present invention.
Fig. 3 is a side cross sectional view showing a structure of another spring used in a feeling-of-stepping-force generation mechanism in the brake system according to the embodiment of the present invention.

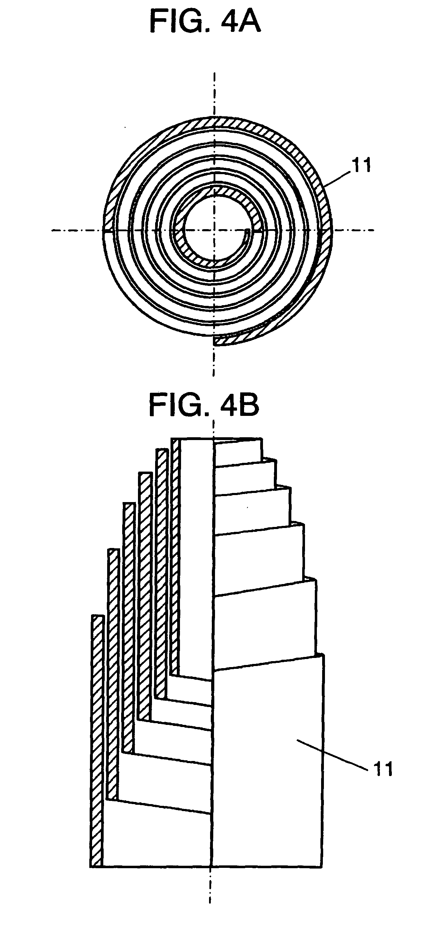

Fig. 4A is a plan view of further spring used in the feeling-of-stepping-force generation mechanism in the brake system according to the embodiment of the present invention.
Fig. 4B is a side view of the further spring used in the feeling-of-stepping-force generation mechanism in the brake system according to the embodiment of the present invention, with a half cross section shown on the left side of the side view.
Fig. 5 is a schematic view of an example of a conventional electric brake system.
Fig. 6 shows a relation between pedal stepping force and brake pedal stroke in the example of the conventional brake system.

### DETAILED DESCRIPTION OF PREFERRED EMBODIMENT

An embodiment of the present invention will be described as follows with reference to drawings.

Fig. 1 is a cross sectional view showing a structure of a brake system according to the embodiment of the present invention.

Fig. 2 shows a relation between pedal stepping force and brake pedal stroke, that is, a stepping force characteristic in this brake system.

A basic structure of the electric brake system according to the present embodiment will be described as follows.

A link mechanism is formed of first frame 22 fixed as a base to vehicle body 50, brake pedal 23, brake arm 24, first fulcrum shaft 25, first link 26, first coupling shaft 27, second coupling shaft 28, second link 29, second fulcrum shaft 30, third coupling shaft 31 and coupling part 32. The link mechanism is joined to master cylinder 35 of a hydraulic brake by operation rod 33. First frame 22 is fixed to vehicle body 50. Brake arm 24 is joined to first frame 22 by first fulcrum shaft 25. Brake arm 24 is provided with brake pedal 23 at one end on the side opposite to the first fulcrum shaft 25 side.

Brake arm 24 is coupled to first link 26 by first coupling shaft 27. First link 26 is coupled to second link 29 by second coupling shaft 28. Second link 29 is joined to first frame 22 by second fulcrum shaft 30. Second link 29 is further coupled by third coupling shaft 31 to coupling part 32 which is joined to operation rod 33. Operation rod 33 is connected to master cylinder 35.

Second hooking part 9 is attached to brake arm 24 at midway between brake pedal 23 and first fulcrum shaft 25.

Second frame 21 fixed to first frame 22 has sensor fixing part 20 attached thereto. Sensor fixing part 20 is provided with stepping force sensor 8. Stepping force sensor 8 contains an element capable of detecting a tension, such as a piezoelectric element or a distortion resistance element.

Feeling-of-stepping-force generation mechanism 12 is positioned between stepping force sensor 8 and brake arm 24. Feeling-of-stepping-force generation mechanism 12 is rotatably connected to each of stepping force sensor 8 and brake arm 24 so as to generate a stepping force which changes nonlinearly with respect to a travel stroke of brake arm 24.

In response to a tension which is applied via feeling-of-stepping-force generation mechanism 12 by the travel of brake arm 24, stepping force sensor 8 detects a stepping force, thereby generating output to control the electrically operated brake.

Feeling-of-stepping-force generation mechanism 12 contains a housing, springs disposed in the housing and a travel mechanism to expand and contract the springs in accordance with the travel of brake arm 24. The travel mechanism and brake arm 24 are rotatably coupled with each other, so that feeling-of-stepping-force generation mechanism 12 can be rotatably coupled to brake arm 24.

More specifically, feeling-of-stepping-force generation mechanism 12 has the housing formed of cylinder 4. First hook 5 fixed to cylinder 4 is hooked on first hooking part 7 that is annular and is connected to connecting part 8a via which first hooking part 7 is connected to stepping force sensor 8.

Cylinder 4 which is the housing of feeling-of-stepping-force generation mechanism 12 contains first coil spring 1, second coil spring 2 coaxial with and shorter in length than first coil spring 1 and piston 3. First coil spring 1 and second coil spring 2 form the springs disposed in the housing. Piston 3 operates as a travel mechanism to expand and contract the first coil spring and the second coil spring in accordance with the travel of brake arm 24.

Piston 3 contains contact part 3a which contacts with first coil spring 1 and second coil spring 2, and shaft 3b which is connected to contact part 3a.

Contact part 3a is shaped like a plane, a cross or a combination of a circle and a cross so as to be able to expand and contract the springs in accordance with the travel of shaft 3b.

The tip of shaft 3b of piston 3 as the travel mechanism on the side opposite to the contact part 3a side is provided with second hook 6. Second hook 6 is hooked on second hooking part 9 attached to brake arm 24.

Second hooking part 9 is formed of a plate containing a circular hole on which second hook 6 is hooked.

The behavior of the brake system thus structured will be further described as follows.

When the driver starts to step on brake pedal 23, the stepping force is applied on master cylinder 35 by operation rod 33 via the aforementioned link mechanism, thereby generating brake hydraulic pressure. At this moment, the brake reaction force is generated by feeling-of-stepping-force generation mechanism 12 described above.

Fig. 2 shows a relation between pedal stepping force and stroke of brake pedal 23, that is, a stepping force characteristic of feeling-of-stepping-force generation mechanism 12.

As shown in Fig. 2, when the pedal stroke continues to increase and reaches a certain level, the reaction force suddenly increases, showing a nonlinear characteristic. This characteristic is similar to the feeling of stepping force in a hydraulic brake.

In the present embodiment, the aforementioned feeling of stepping force is obtained by two coil springs 1 and 2 different in height. More specifically, when the driver starts to step on brake pedal 23, first coil spring 1 is exclusively contracted by piston 3, making the driver perceive the reaction as a feeling of stepping force. When the driver steps on brake pedal 23 more to increase the pedal stroke, second coil spring 2 as well as first coil spring 1 is contracted by piston 3, so that the reaction suddenly increases. At this moment, the driver acquires a large feeling of stepping force.

In feeling-of-stepping-force generation mechanism 12 with first coil spring 1 and second coil spring 2 different in length from each other, it is possible to change the feeling of stepping force, depending on the difference in length between first coil spring 1 and second coil spring 2.

A braking operation, that is, the stepping of brake pedal 23 causes brake arm 24 to pull feeling-of-stepping-force generation mechanism 12. At this moment, the tension of feeling-of-stepping-force generation mechanism 12 is applied on connecting part 8a connected to first hooking part 7. As a result, the tension is applied on stepping force sensor 8, which detects the stepping force.

Stepping force sensor 8 contains a piezoelectric element or a distortion resistance element capable of detecting a tension. The piezoelectric element or distortion resistance element converts the tension applied on first hooking part 7 and connecting part 8a into an electric signal. This electric signal is detected by a controller (not illustrated). The controller controls the electric brake (not illustrated) in accordance with the detected tension, that is, the stepping force. More specifically, in accordance with the tension which is caused by the travel of the brake arm and is applied on feeling-of-stepping-force generation mechanism 12, stepping force sensor 8 detects a stepping force, thereby generating output to control the electrically operated brake.

As this moment, the braking operation allows brake arm 24 to perform a rotation around first fulcrum shaft 25. With respect to this rotation, the connection parts between feeling-of-stepping-force generation mechanism 12 and each of brake arm 24 and stepping force sensor 8 have a rotatable coupling. In other words, second hook 6 is rotatably coupled to second hooking part 9, and first hook 5 is rotatably coupled to first hooking part 7.

Therefore, there is little generation of force such as prying applied in directions other than the axial direction. This enables stepping force sensor 8 to accurately detect a stepping force.

More specifically, the rotatable coupling between second hook 6 and second hooking part 9 and also between first hook 5 and first hooking part 7 make it possible to accurately transmit a stepping force on the brake pedal to the stepping force sensor with a simple structure. As a result, the rotation of brake arm 24 generates a tension in the direction nearly parallel to the axial direction of stepping force sensor 8.

As the spring disposed in cylinder 4 which is the housing of feeling-of-stepping-force generation mechanism 12, it is possible to use hourglass-shaped coil spring 10 which is a coil spring narrow in the middle in the axial direction as shown in Fig. 3.

This structure allows a single spring to create a smoother feeling of stepping force similar to that of a hydraulic brake.

As the spring disposed in cylinder 4 which is the housing of feeling-of-stepping-force generation mechanism 12, it is also possible to use a volute spring shown in Figs. 4A and 4B. The term "volute spring" indicates a spring shown in Figs. 4A and 4B which is formed by spirally winding a plate made from material with spring characteristic in such a manner that the spring extends in the spiral axis direction.

This structure can achieve a feeling-of-stepping-force generation mechanism with high impact durability.

The aforementioned embodiment has dealt with an electric brake system which can be used with an electric brake or a hydraulic brake.

The electric brake system according to the present embodiment can be applied to a case where an electric brake is exclusively used. The electric brake system according to the present embodiment can also be applied to a case where a hydraulic brake is exclusively used.

### INDUSTRIAL APPLICABILITY

In the brake system according to the present invention, a feeling-of-stepping-force generation mechanism is positioned between a stepping force sensor and a brake arm. With this brake system, as the stepping force of the brake pedal, the driver acquires a feeling of operating the brake which is similar to a feeling of nonlinear stepping force in a hydraulic brake. The stepping force sensor can accurately detect the stepping force. In addition, the present invention provides a brake system applicable to both an electric brake and a hydraulic brake. Thus, the present invention is useful as an electric brake system for automobiles.

## Claims

1. A brake system for electrically operating a brake, the brake system comprising:
a stepping force sensor;
a brake arm; and
a feeling-of-stepping-force generation mechanism which is disposed between the stepping force sensor and the bake arm, and which is rotatably connected with each of the stepping force sensor and the brake arm so as to generate a stepping force that changes nonlinearly with respect to a travel stroke of the brake arm, wherein
in response to a tension which is applied via the feeling-of-stepping-force generation mechanism by a travel of brake arm, the stepping force sensor detects a stepping force, thereby generating output to control the brake electrically operated.

2. The brake system according to claim 1, wherein
the feeling-of-stepping-force generation mechanism comprises:
a housing;
a spring disposed in the housing;
a travel mechanism which is disposed in the housing and which expands and contracts the spring disposed in the housing in accordance with the travel of the brake arm, and
the travel mechanism and the brake arm are rotatably connected to each other, and the spring generates a stepping force that changes nonlinearly with respect to the travel stroke of the brake arm.

3. The brake system according to claim 1, wherein
the stepping force sensor includes a first hooking part connected to the stepping force sensor;
the feeling-of-stepping-force generation mechanism contains a first hook and a second hook;
the brake arm includes a second hooking part;
the first hook is hooked on the first hooking part;
the second hook is hooked on the second hooking part; and
each of the stepping force sensor and the brake arm is rotatably connected with the feeling-of-stepping-force generation mechanism.

4. The brake system according to claim 2, wherein
the stepping force sensor includes a first hooking part connected to the stepping force sensor;
the feeling-of-stepping-force generation mechanism contains a first hook and a second hook;
the brake arm includes a second hooking part;
the first hook is hooked on the first hooking part;
the second hook is hooked on the second hooking part; and
each of the stepping force sensor and the brake arm is rotatably connected with the feeling-of-stepping-force generation mechanism.

5. The brake system according to claim 2 or 4, wherein
the spring includes a first coil spring and a second coil spring shorter in length than the first coil spring;
the travel mechanism is composed of a piston coupled to the brake arm; and
the piston travels in accordance with the travel of the brake arm so as to expand and contract the first spring and the second spring.

6. The brake system according to claim 2 or 4, wherein
the spring is formed of a hourglass-shaped coil spring;
the travel mechanism is composed of a piston coupled to the brake arm; and
the piston travels in accordance with the travel of the brake arm so as to expand and contract the hourglass-shaped coil spring.

7. The brake system according to claim 2 or 4, wherein
the spring is formed of a volute spring;
the travel mechanism is composed of a piston coupled to the brake arm; and
the piston travels in accordance with the travel of the brake arm so as to expand and contract the volute spring.
